# EUROPEAN PATENT SPECIFICATION

(11) **EP 1 284 067 B1**
(45) Date of publication and mention of the grant of the patent: **15.02.2006**
(21) Application number: 00974192.7
(22) Date of filing: 09.11.2000
(51) Int. Cl.: H04L 12/413

(54) **METHOD AND DEVICE FOR SIGNAL TRANSMISSION AVOIDING COLLISIONS**
VERFAHREN UND VORRICHTUNG ZUR KOLLISIONSVERMEIDENDEN SIGNALÜBERTRAGUNG
PROCEDE ET DISPOSITIF DE TRANSMISSION DE SIGNAUX DESTINES A EVITER LES COLLISIONS

(30) Priority: 12.11.1999 BE 9900738
(43) Date of publication of application: 19.02.2003
(73) Proprietor: Van den Bergh, Karel Maria, 2580 Putte (BE)
(72) Inventor: Van den Bergh, Karel Maria, 2580 Putte (BE)
(74) Representative: Donné, Eddy
(86) International application number: PCT/BE2000/000134
(87) International publication number: WO 2001/037491

(56) References cited:
- US-A- 4 723 239
- US-A- 4 745 596
- US-A- 4 888 763
- US-A- 5 453 987
- PATENT ABSTRACTS OF JAPAN vol. 009, no. 081 (E-307), 10 April 1985 (1985-04-10) & JP 59 212048 A (CANON KK), 30 November 1984 (1984-11-30)
- PATENT ABSTRACTS OF JAPAN vol. 009, no. 069 (E-305), 29 March 1985 (1985-03-29) & JP 59 205846 A (CANON KK), 21 November 1984 (1984-11-21)

## Description

The present invention relates to a method and a device for signal transmission.

Due to the continuously increasing flow of information, signal transmission is continuously subjected to increasing requirements, as a result of which it has to be performed with continuously increasing speeds. A large disadvantage of signal transmission as it is performed nowadays, consists in that, by increasing the transmission speed, also the risk of so-called collisions is increased, which collisions occur as two or more signals are transmitted by two or more senders at approximately the same point in time over one and the same transmission network. Then, the two signals will interfere with each other, as a result of which they will be deformed in such a manner that it will no longer be possible to filter the original message out of it and both signals will have to be sent again, with the consequence that precious time will be lost. In other words, a saturation of the transmission network is created, as a result of which in some cases up to 80 or 90 % of the capacity is taken up by signals which have to be sent again after a collision has occurred.

US 5.453.987 discloses a system making use of two signal parts, however the system disclosed in this document does not completely exclude the collision of data.

The present invention has as an aim to bring about a considerable increase of the usable capacity of a transmission network and to prevent the disturbance of signals as a consequence of the simultaneous transmission of several signals.

To this aim, the invention in the first place relates to a method for signal transmission, whereby use is made of signals consisting of at least a first signal part consisting of a pulse train and a second signal part, whereby the method consists in trans-mitting the first signal part with a first transmission speed, with the aim of preventing disturbances occurring as a result of the simultaneous presence of several signals; and subsequently transmitting the pertaining second signal part with a second transmission speed after having obtained, by the transmission of the first signal part, the certainty that the second signal part can be transmitted free of at least a number of disturbances, whereby the second transmission speed is higher than the first transmission speed.

By using signals with at least two signal parts, it is possible, by means of the first signal part, to verify efficiently whether the path is free for sending further information. Hereby, it is also possible to determine beforehand whether two or more signals have been put simultanously on the transmission network, whereby then it is possible to interfere in such a manner that only one signal is handled, whereas the other signals are stopped.

By operating preferably with a relatively slow first signal part, the aforementioned control can be performed with a high certainty. By sending the second signal part with a higher transmission speed, it is possible to subsequently send a large quantity of information in a safe manner, without a disturbance occuring.

Preferably, the first signal part will be used for giving priority to one signal when transmitting two or more different signals. The second signal part is transmitted only after priority has been obtained by means of the pertaining first signal part.

In order to create the aforementioned priority, preferably use is made of a technique whereby, if two or more signals are transmitted at the same time, the first signal parts of these signals are compared to each other bit by bit and whereby any signal showing a detectable difference in comparison to another signal also present on the transmission network at the same moment, is stopped immediately.

In practice, it is preferred that the transmission speed of the second signal part is at least five times higher and even better is ten times higher than the transmission speed of the first signal part, as a result of which a lot of information can be transmitted in a short period of time.

For the transmission of the first signal part and/or of the second signal part, preferably use is made of pulse width modulation, as, on the basis thereof, it is possible to easily perform a selection between the first signal parts of several signals, if these latter signals should be present on the transmission network at the same time.

In order to further increase the transmission speed, the first signal part and/or the second signal part can be double-modulated, in other words, can be processed such that a modulation is performed as well at the lower as at the higher level of the signals, more particularly the lower and higher levels of the pulses of which these signals are formed. In practice, it is preferred that the transmission speed of the first signal part is less than 20,000 bits/second.

It is also preferred that the transmission speed of the second signal part is higher than 60,000 bits/second.

It is noted that preferably, it is not only verified whether a disturbance may by created by signals which are put on the transmission network at the same time or approximately the same time, but that also, when putting a signal on the transmission network, it is immediately verified at the location where it is placed whether a signal is already present, in particular, it is verified whether during a certain period no other signal is present on the location where the first-mentioned signal is transmitted, and the first-mentioned signal only is passed when during the aforementioned period of time no other signal is detected at the aforementioned location, which period at least corresponds to the transmission time of the longest bit possible. As a result thereof, it is excluded that the control is performed just in between two pulses, whereby nothing would be detected.

According to the invention, for the signal transmission of the first signal part use shall be made of pulse-shaped signals and to this aim, pulses shall be applied whereby the smallest period which can be covered by such pulse is larger than the time necessary for a fraction of a signal to travel the longest possible path over which the signals are transmitted in one time. This allows to compare the first signal parts of different signals bit by bit.

Still better, the length of a pulse-shaped signal would be twice the aforementioned time.

However, for practical reasons, according to the invention for most applications the length of the aforementioned pulse-shaped signal shall be at least of the order of magnitude of 50 µs.

Of course, the invention also relates to devices, consisting of a transmission network with units for signal transmission and signal receiving in which the method described heretofore is applied.

The invention is, amongst others, especially useful in domotics- or immotics-applications.

It is, however, clear that it may also be of importance in other applications, for example, for transmitting signals by the internet.

It is obvious that by the method according to the invention, a considerable capacity increase for a cable for signal transmission is obtained, without the risk of collisions between the signals.

With the intention of better showing the characteristics of the invention, hereafter, as an example without any limitative character, a preferred form of embodiment of a method according to the invention is described, with reference to the accompanying drawings, wherein:
figure 1 schematically represents a transmission network;
figure 2 schematically represents a situation which can occur when transmitting signals;
figure 3 represents two signals applying the method according to the invention;
figure 4 represents a variant of a first signal part from figure 3;
figure 5 represents a variant of a second signal part from figure 3.

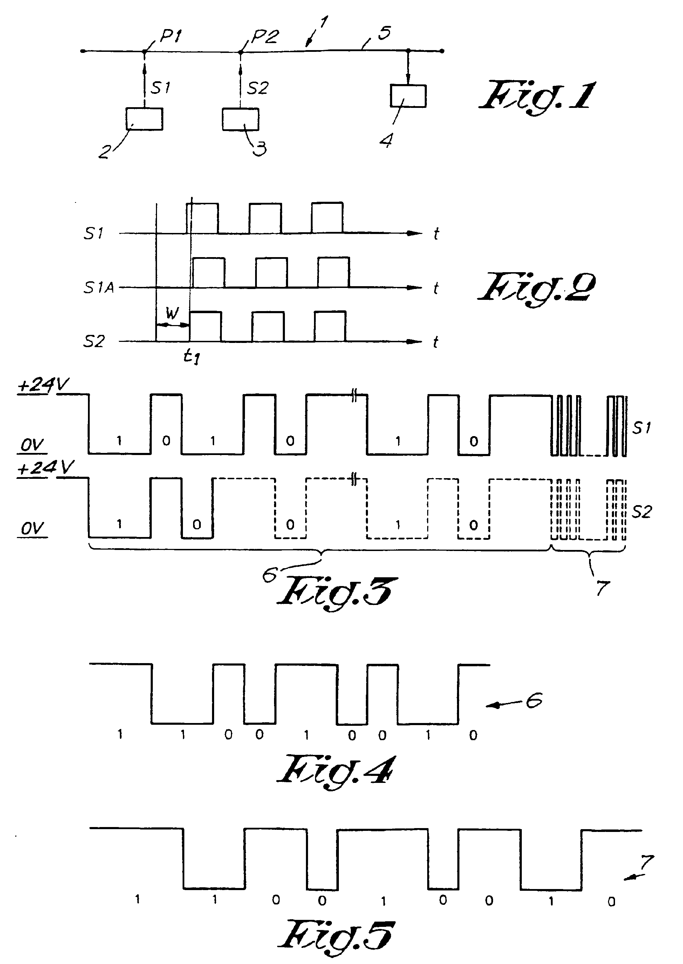

In figure 1, a transmission network 1 is represented schematically, with units 2-3-4 by means of which signals can be transmitted over a carrier 5, in this case, for example, an electric conductor, and signals can be received, respectively. In the represented example, units 2 and 3 emit signals S1 and S2, whereas unit 4, for example, forms a unit which has to be commanded by means of the aforementioned signals.

As represented in figure 2, in the first place it is intended to work with pulse-shaped signals S1 and S2.

It is clear that it is desirable that signals S1 and S2 do not influence each other. In order to exclude such mutual influence, it can be verified whether a signal is already present on the carrier 5 and, in such case, it is possible to wait with the emission of another signal. Hereby, a waiting time can be taken into consideration in order to exclude that, in the case that measurements are performed in between two pulses, this might be interpreted as if no signal were present.

The aforementioned waiting time will have at least the duration of the longest bit of a signal in order to offer the certainty that the line is free at the location where the corresponding signal is put on carrier 5.

Said waiting time, however, does not allow to exclude any possibility of interference of signals, as hereafter explained by means of figure 2.

Figure 2 shows three curves, respectively of the signal S1 on the location P1 in figure 1, of signal S2 on the location P2 in figure 1, whereby this signal then is denominated SIA, as well as of signal S2 at the location P2.

The second and third curves of figure 2 show that, notwithstanding the fact that a waiting time W had been taken into account in which no signal had been detected on the location P2, there is a signal, namely, the signal S1, present on carrier 5. At the moment t1, signal S1 actually has not reached location P2, but nevertheless has left location P1. As signal S2 is put on carrier 5 at that moment, both signals S1 and S2 are present on this carrier 5 at the same time, which may lead to the aforementioned disadvantages.

According to the invention, this is prevented in the manner as explained in the following with reference to figure 3.

As represented in figure 3, use is made of signals S1 and S2 which, according to the invention, substantially consist of two parts, namely, a first signal part 6 with a first transmission speed and a second signal part 7, with a second, higher transmission speed. By transmission speed, the speed has to be understood with which information is transmitted, in other words, the number of bits per second.

Figure 3 shows that both signals S1 and S2 are simultaneously present on carrier 5. According to the invention, at both units 2 and 3 the course of the first signal parts 6 is followed up. From the moment that the signal detected at unit 2 on carrier 5 no longer corresponds to the signal emitted by unit 2, signal S1 is stopped immediately. The same is valid for unit 3 in the case that at said unit 3 a signal should be detected on carrier 5 which no longer corresponds to the signal S2 emitted by unit 3 itself. In such manner, it is obtained that signals S1 and S2 can be present on carrier 5 at the same time exclusively in the case that they are identical. If not, only one signal S1 or S2 will remain, as, such as aforementioned, then a priority will be given to one of the signals S1 or S2.

In this manner, it is guaranteed that, when the phenomenon from figure 2 occurs, automatically the interference of two different signals is prevented.

According to the invention, subsequently the second signal part 7 of the signal which is let through, in this case, signal S1, is transmitted, preferably at a higher transmission speed than the first signal part 6.

By transmitting the second signal part 7 faster than the first signal part 6, the capacity of the transmission network over which the corresponding signal is transmitted can be increased considerably.

As already mentioned, preferably a second transmission speed is used which is at least five times and, still better, ten times higher than the first transmission speed and, in view of efficiency, will be up to hundred times higher.

Regarding the transmission speed of the first signal part 6, it is noted that said speed is chosen in function of the applied pulses such that the smallest period which can be covered by such pulse is larger than the period of time required by an electronic signal for travelling the longest possible path over which the signals S1-S2 are transmitted at a time. In the represented example from figure 1, this is the distance between the extreme points of carrier 5.

More particularly, it is preferred that the aforementioned period covered by such pulse-covered signal is chosen such that it is at least twice the aforementioned time. For practical reasons, however, a considerably larger period will be chosen for the pulses, preferably of the order of magnitude of 50 µs.

The determination of the aforementioned priority preferably is performed by comparing the signals S1 and S2 to each other bit by bit, as well at unit 2 as at unit 3, whereby from the moment that a detectable difference is observed, the signal, emitted at the unit 2 or 3 detecting such difference, is stopped immediately.

As represented in figure 3, the aforementioned selection or, in other words, priority choice can be realized in a simple manner by using, for the first signal part 6, signals S1-S2 which are obtained by creating a voltage and drawing this voltage downward per pulse. In figure 3, this is indicated with the voltage of "+24V", whereby a pulse is created by drawing the voltage level to "0V". It is, however, clear that hereby any voltage level can be applied.

Hereby, long, downward-directed pulses represent a "1", whereas short pulses represent a "0".

The aforementioned drawing downward can be realized by means of a connection between the line on which the voltage of "+24V" is applied and a line on a lower level, in this case of "0V". This connection, of course, is realized in units 2 and 3 in function of the signals S1 and S2 to be emitted.

In a practical embodiment, this connection will be realized by means of one central common line termination which functions as a source of current. Such line termination offers the advantage that very straight flanks for the pulses are obtained.

From figure 3, it is clear that when the signals S1 and S2 are compared bit by bit, in unit 3 the first alteration between the emitted signal S2 and the signal present on carrier 5 is observed. The control of unit 2, anyhow, keeps this signal on the lowest level and determines at that moment the signal on carrier 5. This has as a consequence that, with a suitable control in unit 3, the signal S2 is stopped immediately and its course, which is indicated in dashed line, is not continued any further.

As becomes clear from figure 3, pulse width modulation is applied for the signal transmission of the first signal part 6 and preferably of the second signal part 7 as well.

In order to enhance the signal transmission without quality impairment, it is possible to work with double modulation, as illustrated in figures 4 and 5, for the signal parts 6 and 7, respectively. Hereby, a modulation is performed at the lower as well as at the upper level of the signals S1 and S2, more particularly the lower and upper levels of the pulses of which these signals S1 and S2 consist.

Although the invention in the first place is intended for sending signals through cables or other conductors, either electric, optical or others, it is not excluded to also apply it in the wireless transmission of signals.

The invention is in no way restricted to the form of embodiment described heretofore and represented in the figures, on the contrary may such method for signal transmission be realized in different variants without leaving the scope of the invention as defined in the claims.

## Claims

1. Method for signal transmission, **characterized in that** use is made of signals (S1-S2) consisting of at least a first signal part (6) consisting of a pulse train and a second signal part (7), whereby the method consists in transmitting the first signal part (6) with a first transmission speed, with the aim of preventing disturbances occurring as a result of the simultaneous presence of several signals (S1-S2); and subsequently transmitting the pertaining second signal part (7) with a second transmission speed after having obtained, by the transmission of the first signal part (6), the certainty that the second signal part (7) can be transmitted free of at least a number of disturbances, whereby the transmission speed of the second signal part (7) is higher than the transmission speed of the first signal part (6).

2. Method according to claim 1, **characterized in that** the transmission speed of the second signal part (7) is at least five times higher than the transmission speed of the first signal part (6).

3. Method according to claim 2, **characterized in that** the transmission speed of the second signal part (7) is at least ten times higher than the transmission speed of the first signal part (6).

4. Method according to any of the preceding claims, **characterized in that** the transmission speed of the first signal part (6) is less than 20,000 bits/second.

5. Method according to any of the preceding claims, **characterized in that** the transmission speed of the second signal part (7) is higher than 60,000 bits/second.

6. Method according to any of the preceding claims, **characterized in that** the first signal part (6) is transmitted in order to give priority to one signal when transmitting two or more different signals (S1-S2) and that the second signal part (7) is transmitted only when priority is obtained by means of the pertaining first signal part (6).

7. Method according to any of the preceding claims, **characterized in that**, if two or more signals (S1-S2) are transmitted at the same time, the first signal parts (6) of these signals (S1-S2) are compared to each other bit by bit and that the signal (S1), signals, respectively, showing a detectable difference in comparison to another signal (S2) transmitted at the same time, is stopped immediately.

8. Method according to any of the preceding claims, **characterized in that** for the signal transmission of the first signal part (6) and/or the second signal part (7), use is made of pulse width modulation.

9. Method according to claim 8, **characterized in that** the first signal part (6) and/or the second signal part (7) are double-modulated, in other words, that a modulation is performed at the lower as well as the upper level of the signals (S1-S2), more particularly the lower and upper level of the pulses of which these signals (S1-S2) are composed.

10. Method according to any of the preceding claims, **characterized in that** previous to the transmission of signal (S1), it is verified whether during a certain period of time any other signal (S2) is present at the location where the first-mentioned signal (S1) is emitted and that the first-mentioned signal (S1) is let through only when during said period of time no other signal (S2) is detected at said location, which period of time at least corresponds to the transmission time of the longest bit possible.

11. Method according to any of the preceding claims, **characterized in that** for the signal transmission of the first signal parts (6), use is made of pulse-shaped signals and that to this aim pulses are used whereby the smallest period of time which can be covered by such pulse is larger than the time required by an electronic signal for travelling the longest possible path over which the signals (S1-S2) are transmitted at a time.

12. Method according to claim 11, **characterized in that** the length of a pulse-shaped signal is at least twice the aforementioned time.

13. Method according to claim 12, **characterized in that** the length of a pulse-shaped signal is at least of the order of magnitude of 50 µs.

14. Method according to any of the preceding claims, **characterized in that** at least for the first signal part (6), use is made of signals (S1-S2) which are obtained by creating a voltage and drawing this voltage downward in pulses.

15. Method according to claim 14, **characterized in that** the voltage is drawn downward by means of a connection between the line in which said voltage is present and a line which is on a lower level, preferably zero-level.

16. Method according to claim 15, **characterized in that** the connections are realized by means of a line termination operating as a source of current.

17. Device, consisting of a transmission network with units for signal transmission and signal receiving, **characterized in that** it applies the method according to any of the preceding claims.

18. Device according to claim 17, **characterized in that** it forms part of a domotics- or immotics-application.

## Patentansprüche

1. Verfahren zur Signalübertragung, **dadurch gekennzeichnet, dass** Signale (S1-S2) verwendet werden, die aus zumindest einem aus einer Impulsfolge bestehenden ersten Signalteil (6) und einem zweiten Signalteil (7) bestehen, wobei das Verfahren daraus besteht, das erste Signalteil (6) mit einer ersten Übertragungsgeschwindigkeit zu übertragen, mit dem Ziel, Störungen zu verhindern, die als Ergebnis des gleichzeitigen Vorhandenseins mehrerer Signale (S1-S2) auftreten; und anschließend das zugehörige zweite Signalteil (7) mit einer zweiten Übertragungsgeschwindigkeit zu übertragen, nachdem, durch die Übertragung des ersten Signalteils (6), die Sicherheit erhalten wurde, dass das zweite Signalteil (7) frei von zumindest einer Anzahl von Störungen übertragen werden kann, wobei die Übertragungsgeschwindigkeit des zweiten Signalteils (7) höher als die Übertragungsgeschwindigkeit des ersten Signalteils (6) ist.

2. Verfahren gemäß Anspruch 1, **dadurch gekennzeichnet, dass** die Übertragungsgeschwindigkeit des zweiten Signalteils (7) zumindest fünf Mal höher als die Übertragungsgeschwindigkeit des ersten Signalteils (6) ist.

3. Verfahren gemäß Anspruch 2, **dadurch gekennzeichnet, dass** die Übertragungsgeschwindigkeit des zweiten Signalteils (7) zumindest zehn Mal höher als die Übertragungsgeschwindigkeit des ersten Signalteils (6) ist.

4. Verfahren gemäß einem der vorgenannten Ansprüche, **dadurch gekennzeichnet, dass** die Übertragungsgeschwindigkeit des ersten Signalteils (6) weniger als 20.000 Bits/Sekunde beträgt.

5. Verfahren gemäß einem der vorgenannten Ansprüche, **dadurch gekennzeichnet, dass** die Übertragungsgeschwindigkeit des zweiten Signalteils (7) höher als 60.000 Bits/Sekunde ist.

6. Verfahren gemäß einem der vorgenannten Ansprüche, **dadurch gekennzeichnet, dass** das erste Signalteil (6) übertragen wird, um einem Signal Vorrang zu geben, wenn zwei oder mehr unterschiedliche Signale (S1-S2) übertragen werden, und dass das zweite Signalteil (7) nur übertragen wird, wenn mittels des zugehörigen ersten Signalteils (6) Vorrang erhalten wird.

7. Verfahren gemäß einem der vorgenannten Ansprüche, **dadurch gekennzeichnet, dass**, wenn zwei oder mehr Signale (S1-S2) zur selben Zeit übertragen werden, die ersten Signalteile (6) dieser Signale (S1-S2) Bit für Bit miteinander verglichen werden und dass das Signal (S1), beziehungsweise die Signale, die einen feststellbaren Unterschied in Vergleich zu einem zur selben Zeit übertragenen anderen Signal (S2) aufweisen, unmittelbar gestoppt wird bzw. werden.

8. Verfahren gemäß einem der vorgenannten Ansprüche, **dadurch gekennzeichnet, dass** für die Signalübertragung des ersten Signalteils (6) und/oder des zweiten Signalteils (7) Pulsbreitenmodulation angewendet wird.

9. Verfahren gemäß Anspruch 8, **dadurch gekennzeichnet, dass** das erste Signalteil (6) und/oder das zweite Signalteil (7) doppelt moduliert werden, mit anderen Worten, dass eine Modulation sowohl an dem unteren als auch dem oberen Niveau der Signale (S1-S2) durchgeführt wird, insbesondere dem unteren und oberen Niveau der Impulse, aus denen diese Signale (S1-S2) zusammengesetzt sind.

10. Verfahren gemäß einem der vorgenannten Ansprüche, **dadurch gekennzeichnet, dass** vor der Übertragung des Signals (S1) verifiziert wird, ob während einer bestimmten Zeitspanne irgendein anderes Signal (S2) an dem Standort vorhanden ist, wo das erstgenannte Signal (S1) ausgesandt wird, und dass das erstgenannte Signal (S1) nur durchgelassen wird, wenn während besagter Zeitspanne kein anderes Signal (S2) an besagtem Standort festgestellt wird, welche Zeitspanne zumindest der Übertragungszeit des längstmöglichen Bits entspricht.

11. Verfahren gemäß einem der vorgenannten Ansprüche, **dadurch gekennzeichnet, dass** für die Signalübertragung der ersten Signalteile (6) pulsförmige Signale verwendet werden und dass zu diesem Zweck Pulse verwendet werden, wobei die kleinste Zeitspanne, die von einem solchen Puls abgedeckt werden kann, größer ist als die Zeit, die ein elektronisches Signal benötigt, um den längstmöglichen Weg zurückzulegen, über den die Signale (S1-S2) auf einmal übertragen werden.

12. Verfahren gemäß Anspruch 11, **dadurch gekennzeichnet, dass** die Länge eines pulsförmigen Signals zumindest zwei Mal die vorgenannte Zeit beträgt.

13. Verfahren gemäß Anspruch 12, **dadurch gekennzeichnet, dass** die Länge eines pulsförmigen Signals zumindest in der Größenordnung von 50 µs liegt.

14. Verfahren gemäß einem der vorgenannten Ansprüche, **dadurch gekennzeichnet, dass** zumindest für das erste Signalteil (6) Signale (S1-S2) verwendet werden, die durch Erzeugen einer Spannung und Abwärtsziehen dieser Spannung in Pulsen erhalten werden.

15. Verfahren gemäß Anspruch 14, **dadurch gekennzeichnet, dass** die Spannung mittels einer Verbindung zwischen der Leitung, worin besagte Spannung vorliegt, und einer Leitung, die auf einem niedrigeren Niveau, vorzugsweise Nullniveau, ist, abwärtsgezogen wird.

16. Verfahren gemäß Anspruch 15, **dadurch gekennzeichnet, dass** die Verbindungen mittels eines Leitungsanschlusses verwirklicht werden, welcher als Stromquelle wirkt.

17. Vorrichtung, bestehend aus einem Übertragungsnetzwerk mit Einheiten für Signalübertragung und Signalempfang, **dadurch gekennzeichnet, dass** sie das Verfahren gemäß einem der vorliegenden Ansprüche anwendet.

18. Vorrichtung gemäß Anspruch 17, **dadurch gekennzeichnet, dass** sie Teil einer Domotica- oder Immotica-Anwendung ist.

## Revendications

1. Procédé pour la transmission de signaux, **caractérisé en ce qu'**il est fait usage de signaux (S1-S2) constitués au moins par une première partie de signal (6) constituée d'un train d'impulsions et par une deuxième partie de signal (7), le procédé consistant à transmettre la première partie de signal (6) à une première vitesse de transmission dans le but d'empêcher des perturbations dues à la présence simultanée de plusieurs signaux (S1-S2) ; et par la suite transmettre la deuxième partie de signal en question (7) à une deuxième vitesse de transmission après avoir obtenu, via la transmission de la première partie de signal (6), la certitude de pouvoir transmettre la deuxième partie de signal (7) en l'absence d'au moins un certain nombre de perturbations, la vitesse de transmission de la deuxième partie de signal (7) étant supérieure à la vitesse de transmission de la première partie de signal (6).

2. Procédé selon la revendication 1, **caractérisé en ce que** la vitesse de transmission de la deuxième partie de signal (7) est au moins cinq fois supérieure à la vitesse de transmission de la première partie de signal (6).

3. Procédé selon la revendication 2, **caractérisé en ce que** la vitesse de transmission de la deuxième partie de signal (7) est au moins dix fois supérieure à la vitesse de transmission de la première partie de signal (6).

4. Procédé selon l'une quelconque des revendications précédentes, **caractérisé en ce que** la vitesse de transmission de la première partie de signal (6) est inférieure à 20.000 bits/seconde.

5. Procédé selon l'une quelconque des revendications précédentes, **caractérisé en ce que** la vitesse de transmission de la deuxième partie de signal (7) est supérieure à 60.000 bits/seconde.

6. Procédé selon l'une quelconque des revendications précédentes, **caractérisé en ce que** la première partie de signal (6) est transmise dans le but de donner priorité à un signal lors de la transmission de deux signaux différents (S1-S2) ou plus et **en ce que** la deuxième partie de signal (7) est transmise uniquement lorsque la priorité a été obtenue au moyen de la première partie de signal concernée (6).

7. Procédé selon l'une quelconque des revendications précédentes, **caractérisé en ce que**, lorsque deux signaux (S1-S2) ou plus sont transmis en même temps, les premières parties (6) de ces signaux (S1-S2) sont comparées l'une à l'autre, bit par bit, et **en ce que** le signal (S1), les signaux, respectivement qui manifeste(nt) une différence détectable par rapport à un autre signal (S2) transmis en même temps est/sont stoppés immédiatement.

8. Procédé selon l'une quelconque des revendications précédentes, **caractérisé en ce que**, pour la transmission de la première partie de signal (6) et/ou de la deuxième partie de signal (7), il est fait usage d'une modulation d'impulsions en durée.

9. Procédé selon la revendication 8, **caractérisé en ce que** la première partie de signal (6) et/ou la deuxième partie de signal (7) sont soumises à une double modulation, en d'autres termes, **en ce qu'**une modulation est mise en oeuvre aussi bien au niveau inférieur qu'au niveau supérieur des signaux (S1-S2), plus particulièrement au niveau inférieur et au niveau supérieur des impulsions qui composent lesdits signaux (S1-S2).

10. Procédé selon l'une quelconque des revendications précédentes, **caractérisé en ce que**, avant de procéder à la transmission de signal (S1), une vérification est mise en oeuvre quant au fait de savoir si, au cours d'un certain laps de temps, un quelconque autre signal (S2) est présent à l'endroit d'émission du signal mentionné en premier lieu (S1) et **en ce qu'**on laisse passer le signal mentionné en premier lieu (S1) uniquement lorsque, au cours dudit laps de temps, aucun autre signal (S2) n'est détecté audit endroit, ledit laps de temps correspondant au moins au temps de transmission du bit le plus long possible.

11. Procédé selon l'une quelconque des revendications précédentes, **caractérisé en ce que**, pour la transmission des premières parties de signaux (6), il est fait usage de signaux en forme d'impulsions et **en ce que**, à cet effet, on utilise des impulsions par lesquelles le plus petit laps de temps qui peut être couvert par une impulsion de ce type est supérieur au temps requis par un signal électronique pour parcourir le chemin le plus long possible correspondant à la transmission simultanée des signaux (S1-S2).

12. Procédé selon la revendication 11, **caractérisé en ce que** la longueur d'un signal en forme d'impulsions correspond au moins au double du temps susmentionné.

13. Procédé selon la revendication 12, **caractérisé en ce que** la longueur d'un signal en forme d'impulsion représente au moins l'ordre de grandeur de 50 µs.

14. Procédé selon l'une quelconque des rotations précédentes, **caractérisé en ce que**, au moins pour la première partie de signal (6), il est fait usage de signaux (S1-S2) que l'on obtient en générant une tension et en tirant cette tension vers le bas dans les impulsions.

15. Procédé selon la revendication 14, **caractérisé en ce que** la tension est tirée vers le bas au moyen d'une connexion entre la ligne dans laquelle EST présente ladite tension et une ligne qui est située à un niveau inférieur, de préférence au niveau zéro.

16. Procédé selon la revendication 15, **caractérisé en ce que** les connexions sont réalisées au moyen d'une borne de ligne faisant office de source de courant.

17. Dispositif, constitué par un réseau de transmission comprenant des unités pour la transmission de signaux et pour la réception de signaux, **caractérisé en ce qu'**il met en oeuvre le procédé selon l'une quelconque des revendications précédentes.

18. Dispositif selon la revendication 17, **caractérisé en ce qu'**il fait partie d'une application domotique ou d'une application immotique.
